# EUROPEAN PATENT APPLICATION

(11) **EP 2 374 536 A1**
(43) Date of publication of application: **12.10.2011**
(21) Application number: 10159295.4
(22) Date of filing: 08.04.2010
(51) Int. Cl.: B01J 23/00, B01J 37/03, B01D 53/94

(54) **Palladium-containing oxidation catalyst on ternary Al-Ti-Zr-oxide**

(71) Applicant: Ford Global Technologies, LLC, Dearborn, MI 48126 (US)
(72) Inventor: Carberry, Brendan, 52074, Aachen (DE); Chigapov, Albert, 52072, Aachen (DE); Ukropec, Robert, 52072, Aachen (DE)
(74) Representative: Drömer, Hans-Carsten

(57) **Abstract**

The current invention refers to an oxidation catalyst for reduction of CO and NOₓ in the exhaust gases, which comprises the combination of palladium with a ternary mixed oxide of titanium, zirconium and aluminum. This combination is providing unusual low-temperature activity of palladium in CO oxidation. The invention is also directed to a method for the production of such a catalyst, including its preparation on honeycomb monoliths

## Description

The current invention is related to a catalyst composition for the reduction of CO and hydrocarbons in the exhaust gases, which comprises the combination of palladium and metal oxide support. The invention is also directed to a method for the production of such a catalyst composition and to produce a monolithic substrate, containing such a catalyst composition.

Palladium-containing catalysts on oxide supports are known in the prior art. Such formulations are designed for DOC (=Diesel oxidation catalyst). Such DOCs are described for example in US 6889498 B1, KR 2007 000315, US 2005 160724 A1, WO 2004104389, WO 2001 002083 and WO 2007077462 A1. In such catalysts, palladium is usually mixed with other noble metals, especially with platinum group metals. A mixed Pt-Pd catalyst for CO oxidation under "cold -start" conditions is described in US 5128306, W096/39576, EP 0747581 A1 for example. Recent patents in this area, basically describing mixed Pt-Pd oxidation catalysts for automotive applications, are EP 2070581 A1 and WO 2008117941 A1.

Current commercial DOCs are using basically Pt/ alumina (Pt/Al₂O₃) catalyst to reduce CO (carbon monoxide) and HC (hydrocarbons) emissions from Diesel engines. However, these DOCs have the drawback that they are very expensive due to the high Pt loading. In addition, those catalysts can completely oxidize CO and HC only at temperatures near and above 150°C. Although the average temperature of Diesel exhaust gas is 150°C during ECE part of European driving cycle NEDC, under practical conditions, it is often required to achieve high CO conversion rates at lower exhaust temperatures, so even the high Pt loadings (50 - 100 g/ft³ resp. 1.75-3. 5 mg/cm³ and higher) can hardly cope with this problem; typically the Pt loading of 90 -120 g/ft³ resp. 3.2-4.2 mg/cm³ is now in service for Diesel passenger cars applications.

Among two common oxidation catalysts, namely platinum and palladium, Pt is the most active for oxidation of CO and HC in diesel exhaust. CO emissions with the Pt catalyst are typically less than a half of those with the Pd catalyst. Also the hydrocarbon emissions are lower when the platinum catalyst is used, although the performance difference between Pt and Pd is smaller for HC oxidation. Lower activity of Pd in diesel exhaust has been confirmed by a number of publications. One of the reasons for the low activity of Pd catalysts is seen in the higher susceptibility of palladium to sulfur poisoning. In applications with ultra-low sulfur fuels, Pt can be partially substituted by Pd, up to about 30% by mass. Current commercial DOC started to use mixed Pt-Pd formulations for Diesel passenger cars beginning from 2004 using Pt: Pd ratio 2:1 (Pt 67%, Pd 33% by weight). Leading catalytic companies are going to introduce catalysts with Pt: Pd ratio 1:1 to the market in the nearest future.

Even with ultra low sulfur fuels, Pt/Pd formulations show somewhat lower CO/HC conversion rates compared to Pt only catalysts. However, the current market price for Pt is 1331 USD/Troy Ounce (on September 23, 2009), more than four times higher than for Pd, which is 300 USD/Troy Ounce. Due to the price difference between the metals, the substitution of Pt by Pd is beneficial and can provide for a significant cost saving.

The objective of the current invention is to increase the catalytic activity of pall a-dium-containing catalysts, especially at low temperatures of 150°C or less for CO and HC reduction to develop less expensive and more effective catalysts for automotive and especially for Diesel fuelled engine applications. The total decrease of noble metal loading is another essential key factor of cost savings for Diesel exhaust aftertreatment systems.

This objective is achieved by a catalyst for reduction of CO and hydrocarbons, in the exhaust gases, in particular in exhaust gas emission of a combustion engine, this new catalyst comprises palladium/mixed oxide combination, characterized in that, the mixed oxide support comprises a ternary mixed oxide of titanium, zirconium and aluminum.

The catalyst according to the current invention revealed unusual low-temperature CO oxidation activity; with complete CO oxidation below or near 100°C under Diesel exhaust conditions. Such low-temperature activity was not observed for palladium, deposited on another supports, which are available for automotive aftertreatment. The catalyst according to this invention has an activity in CO oxidation even at near room temperature. Therefore, it is possible with the combination of palladium and this ternary mixed oxide as a support to use palladium as the only noble metal component, deposited on the support and further on monolithic substrate for aftertreatment systems, although it is always possible to combine palladium with other noble metals, especially with platinum-group metals, such as platinum and rhodium.

Due to its high low-temperature catalytic activity, the catalyst according to the current invention is suitable to be used as a catalyst in automotive aftertreatment systems for elimination or reduction of exhaust gas emissions, especially for CO (carbon dioxide), and HC (hydrocarbons) in particular for diesel-fuelled vehicles. However, those catalyst materials are not limited to that area of use. These catalysts can as well be used in automotive aftertreatment systems for gasoline-fuelled engines, including 3-way catalyst and in stationary diesel engines. It can be used basically for automotive applications, but is also suitable for stationary applications in industry, where low-temperature elimination of CO is necessary, e.g. purification of gases for chemical plants, power generation plants, and stationary engines, for example for ammonia plants, polymerization reactions of hydrocarbons and for C0₂ laser technology processes, and also for CO removal in parking areas, especially in closed parking areas and for respiratory protection systems.

According to a preferred embodiment of the catalytic composition according to the current invention, the molar ratio Ti : Zr ranges from 3:1 to 1:3, preferably 2:1 to 1:2, more preferred 1,25:1 to 1:1,25, the most preferred about 1:1. The Al: Ti + Zr molar ratio may be varied from 1:5 to 1: 30, preferably 1:10 to 1:25, more preferred 1:15 to 1:23, the most preferred is about 1:20. The Al: Ti + Zr stands for the molar ratio of aluminum to the sum of titanium and zirconium. A catalytic combination of palladium with such a support material is preferred due to its high CO and HC conversion rates especially at temperatures below 150°C while allowing at the same time low palladium loadings of only 10 to 60 g/ft³.

According to the further development of the catalytic material according to the current invention, the surface area of the ternary mixed oxide is at least 140 m²/g after calcinations at 660°C. Most preferred, the surface area of the ternary mixed oxide ranges from 230 250 to 301 m²/g with average particles size of 44-68 A depending on calcinations temperature of 400-660°C. The surface areas can be measured by typical methods like BET-studies. Such high surface areas and small particle sizes, obtained by our special preparation method are beneficial to improve the overall catalytic activity, especially at low temperatures.

According to another development of the catalytic material according to the current invention, the new support for palladium consists of a ternary mixed oxide of titanium, zirconium and aluminum optionally on a honeycomb support. It has been realized that such mixed oxide support which do only comprise titanium, zirconium and aluminum reveals especially high catalytic activities if impregnated with only palladium as a noble metal component.

The catalytic material according to the current invention can contain other noble metals in amounts less than 5 wt.-%, more preferably less than 2 wt.-%. According to a highly preferred embodiment of the catalyst according to the current invention, the catalyst material does not contain other noble metals, especially other platinum group metals, besides palladium. Such a catalyst is highly active in exhaust gas cleaning and on the other hand it is very cost effective, also due to the possibility to use low palladium loadings of only 10 to 60 g/ft³, preferably 20 to 40 g/ft³.

A further embodiment of the current invention is a method for the preparation of a carrier material for a catalyst material according to this invention, featuring "instantaneous" or "momentary" hydrolysis. This hydrolysis included the pouring out a mixture of aluminum, titanium and zirconium alkoxides into the large excess of hot or boiling water, mixed with ammonia, under stirring to form such a ternary mixed oxide, with the following filtration, drying and calcinations. The preparation of Al-Ti-Zr mixed oxide by instantaneous hydrolysis is presented in Example 1.

Such a preparation procedure for mixed Al-Ti-Zr oxide revealed after impregnation with palladium an unusual low-temperature activity for Pd/Al-Ti-Zr mixed oxide, i.e. below 150 °C in CO oxidation. One of the key factors of this high activity is believed to be caused by the instantaneous and homogeneous oxide formation, providing the perfect mixing of 3 oxide components on molecular level, which is forced by the procedure described above. The instantaneous hydrolysis of the metal alkoxides and thus oxide formation can also be achieved by contacting the metal alkoxides with water steam. It has been proven to be advantageous, if the hot water or steam contains additionally ammonia.

The aluminum, titanium and zirconium alkoxides can be chosen from C₂ to C₆-alkoxides, preferably from their isopropoxides and/or butoxides, especially n-butoxides. Separation of the ternary mixed oxide from mother liquid can be done by filtering for example. Calcination can be carried out for example at 400 °C up to 650- 660°C for 2 h. Before calcination, a drying step should be included, for example at 100 °C.

The ternary mixed oxide support obtained as described above can be deposited on another support material, being preferably in a form of a honeycomb structure, such as a cordierite substrate. This can be achieved for example by dispersing the ternary mixed oxide in calcined or non-calcined form in water or another fluid and covering the support material with that mixture, followed by drying. To enhance the surface contact and to provide better links with a substrate, a binder material like zirconyl nitrate in diluted nitric acid can be added to the suspension of the ternary mixed oxide in water before coating the support. Afterwards, the covered support material can be calcinated at 600 up to 660 °C for example. The coating of cordierite support with ternary mixed Al-Ti-Zr oxide is shown in Example 3.

For preparation of ternary mixed Al-Ti-Zr on high-surface area support like alumina or alumina-washcoated cordierite substrate, this alumina support or substrate were first impregnated with the mixture of the corresponding alkoxides with the following treatment with water steam containing ammonia, and further drying and calcinations. Another successful approach was to hydrolyze the mixture of alkoxides by diluted nitric acid at room temperature with complete their dissolution and to impregnate alumina or alumina-washcoated cordierite monoliths with this solution followed by drying and calcination.

A further embodiment of the current invention is a method for the preparation of a palladium-containing catalyst on Al-Ti-Zr ternary mixed oxide for the reduction of CO hydrocarbons. Two methods were successfully developed, and these methods are presented in Examples 2a and 2b. First method included the ion-exchange of prepared Al-Ti-Zr mixed oxide with a water solution containing palladium ammonium nitrate at T=100°C with the further washing of oxide with distilled water, drying and calcinations. Another technique included the impregnation of the calcinated ternary mixed oxide with a solution of a palladium salt, preferably a water solution of palladium ammonium nitrate and/or palladium nitrate especially in the presence of ammonia, benzoic acid and urea, preferably at a temperature from 60 to 90 °C, to obtain a palladium impregnated ternary mixed oxide.

The ternary mixed oxide for the palladium impregnation can be synthesized as described above. The same methods of palladium deposition can be used for ternary mixed AI-Ti-Zr oxide washcoated on cordierite substrate, deposited on alumina and alumina-washcoated cordierite substrate.

The new method of Pd deposition in the presence of benzoic acid, urea and ammonia is providing high activity and dispersion of palladium species, what is why the addition of benzoic acid, urea and ammonia is preferred.

In this context, it is further preferred to impregnate the ternary mixed oxide with a solution of a palladium salt at elevated temperatures, i.e. at a temperature from 60 to 90 °C, especially from 80 to 90 °C. The ternary mixed oxide carrier can be calcinated at 600-660°C before palladium impregnation, which is preferred to avoid any change of activity caused by support sintering.

The impregnation of the carrier with palladium can take place as precipitation and/or as ion-exchange reaction. lon-exchange deposition leads to catalytic materials with high catalytic activity with respect to CO oxidation. To enhance the catalytic activity with respect to hydrocarbon oxidation, slow palladium precipitation with some excess of water can be carried out. The precipitation is favorable in the presence of benzoic acid, ammonia and urea. This method is similar to ion-exchange, but without washing of the sample, as a result, all palladium is remaining on the carrier. Catalytic materials obtained under these conditions show high catalytic activity not only with respect to CO removal, but also for hydrocarbon oxidation at temperatures of 150 °C and less as well.

According to a further development of the method for the preparation of a catalyst according to this invention, the palladium impregnation is carried out in such a way that a loading of 10 to 60 g/ft³ resp. 0.35-2.1 mg/cm³, preferably 20 to 40 g/ft³ resp. 0.70- 1.4 mg/cm³ is achieved. This can be achieved by triggering the concentration of the palladium solution for example.

According to a further development of the invention an Al-Ti-Zr ternary mixed oxide was impregnated on support material, the support material being made from alumina or alumina washcoated cordierite and being preferably in form of a honeycomb structure. This is advantageous, because can significantly reduce the loading of Al-Ti-Zr oxide, which is more expensive than alumina. In addition, it allows the integration of this new catalyst directly on commercially available monolithic substrates of alumina-washcoated cordierite , which are in service for Diesel oxidation catalyst for example, while preserving the unusual low-temperature CO oxidation activity of the catalyst according to this invention.

In this context, it is especially preferred to use steam for the hydrolysis of the alkoxides in order to avoid blocking of channels of the honeycomb structure of the support material by bulky ternary mixed oxide deposition. Especially preferred is a mixture of steam and ammonia. This method and also the second method using dissolution of alkoxides in nitric acid are described below in Examples 4a and 4b.

It is also possible, to repeat the above mentioned deposition procedure of the ternary mixed oxide on alumina-washcoated cordierite several times, for example twice or three times. In such a case, after each step the calcination can be carried out as intermediate calcination at a temperature of 400 to 450 °C. The final coating with ternary mixed oxides is then followed by calcination at 600 to 660 °C for example.

Another embodiment of this invention is a catalyst for automotive or industrial applications, for respiratory protection and exhaust gas removal in closed parking areas, preferably as DOC (Diesel oxidation catalyst), comprising a palladium combined with ternary mixed oxide of titanium, zirconium and aluminum obtainable by a method for the preparation of a catalyst material as described above and in examples below.

A further embodiment of this invention is a catalytic system ( aftertreatment device) for exhaust gas aftertreatment, comprising at least one catalyst according to this invention and at least one further catalyst, preferably selected from DOC, LNT (lean NOx trap), SCR (selective catalytic reduction) catalyst or DPF (Diesel particulate filter). The combination with another catalyst improves the overall cleaning capabilities of the catalytic system.

This invention is also directed to the use of a catalyst according to this invention for the reduction of CO and hydrocarbons, in the gases, in particular in exhaust gas of a combustion engine, in automotive or industrial applications, for respiratory protection and CO reduction especially in closed parking areas, but preferably as DOC (Diesel oxidation catalyst).

The current invention is described in detail by means of several examples in the following. The results presented here are also general to the invention as a whole:

### Testing methods:

All catalytic material samples were tested in a laboratory-scale packed-bed flow reactor made from a 1" ID x 4" L quartz tube. An electric furnace was used for the heating of the reactor.

A powder or core catalyst sample was inserted into the quartz tube, a core sample was wrapped with matting material, and glass wool was used to hold a powder sample. For powder sample, the thermocouple was inserted into the center of the sample. For core sample, the sample was inserted together with two thermocouples inserted 5 mm right before and behind the core sample. A conventional flow setup was used for gas mixture preparation. All gases were of ultra high purity. Humidifier was installed to provide precise water concentration in the gas line. The flow rates were controlled using mass flow controllers (MKS, Munich, Germany). To prevent water condensation, all connection lines were installed in a thermal box maintaining constant temperature of 85°C. Reactor effluents were analyzed with a HP 6890A gas chromatograph, using Porapak Q and NaX capillary columns and also with FTIR MINI-LAB Multi Gas 2030 (MKS, Munich).

### CO/HC oxidation light-off study:

Carbon monoxide and hydrocarbons light-off performance for the catalytic material and catalysts of the present invention and reference catalysts was carried out using the following reaction mixture, simulating cold-start conditions for Diesel engine:

| | |
|---|---|
| NO | 200 ppm; |
| CO | 1250 ppm (0.125%); |
| C₃H₆ | 250 ppm; |
| CO₂ | 5.0 %; |
| H₂O | 5.0%; |
| O₂ | 10% and |
| N₂ | balance |

Space velocities (SV) were selected as SV=50 000 h-¹ for powder samples and SV= 10000 h-¹ for core samples. The temperature ramp was selected as 2.5 °C/minute combined with analysis of gas effluents by gas chromatography and FTIR MultiGas 2030 MKS.

For low-temperature testing of activity at near-room temperatures and temperatures below 60 °C, the reaction mixture was the following:

| | |
|---|---|
| CO | 0.5% |
| O₂ | 20.0 % |
| H₂O | 1.7% |
| CO₂ | 1.9% |
| N₂ | balance |

Space velocities were selected as SV = 500-50000 h-¹.

XRD data were recorded on X'pert Pro diffract meter (PANanalytical, Netherlands) equipped with PIXel detector and using Cu Kα-irradiation. BET surface areas were measured using Micromeritic ASAP 2010 analyzer.

### Catalyst preparation:

### Example 1 -Invention

### Preparation of AI-Ti-Zr mixed oxide by "instantaneous" hydrolysis

47.9 g of zirconium (IV) n-butoxide Zr (OBu)₄ (80% solution in n-butanol, Aldrich) were mixed with 34 g of titanium (IV) n-butoxide (Alfa Aesar), 10g of n-butanol (Merck) and 2.0 g of aluminum triisopropoxide (Alfa Aesar) in closed polypropylene container and stirred until the complete dissolution of aluminum triisopropoxide. This mixture was quickly poured by one movement into a glass container with 500g of boiling distilled water; 60 ml of ammonia (25%, Fluka) were added to this glass container right before the addition of the mixture of alkoxides. This solution was stirred during 40 minutes under heating, which was enough for boiling. The resulting solid was separated from liquid on a filter and thoroughly washed with distilled water with the following drying at 100°C and calcinations at 600-650°C.

### Examples 2- Invention

### Preparation of Pd / Al-Ti-Zr mixed oxide powder

### Example 2a

2g of mixed Al-Ti-Zr oxide were treated with a solution containing 400 mg of palladium tetraammonium nitrate Pd (NH₃)₄ (NO₃)₂ in 10 ml of distilled water at 100°C under stirring , the solid was then thoroughly washed with distilled water with the following drying at 100 °C and calcinations at 600 °C for 2 h.

### Example 2b

2g of Al-Ti-Zr mixed oxide prepared according to Example 1, was impregnated with a solution containing palladium tetraammonium nitrate Pd (NH₃)₄ (NO₃)₂, having 5 wt % Pd (providing palladium loading 0.5-3 wt.-%), urea 0.33 g; ammonium hydroxide solution (25% NH₄OH) 0.2g, benzoic acid 55 mg, ethanol 0.1g and distilled water to 4.0 ml of total volume. The impregnated solid was dried overnight in a closed container at 88°C and finally calcined at 600°C for 2 h.

### Example 3-Invention

Preparation of Pd/Al-Ti-Zr mixed oxide on monolith (core sample 1"x1.5") as support material

The core samples were drilled from cordierite monolith, supplied by NGK, having a cell density of 400 cpsi (= 'cells per square inch'). These cores were treated with 12 ml of a suspension containing 40 wt.-% of Al-Ti-Zr powder prepared according to Example 2 in water with added 0.57g of zirconyl nitrate (35 wt.-% solution in diluted nitric acid) as binder. The suspension was applied to the core sample, using cone connection and vacuum from water vacuum pump with the following drying at 100 °C and intermediate calcinations at 400 °C. This procedure was repeated 2 times until the loading of Al-Ti-Zr oxide on cordierite reached 3g. Final calcinations were carried out at 600°C for 2 h.

The resulting core was impregnated with a solution containing 280 mg of palladium tetra ammonium nitrate Pd (NH₃)₄ (NO₃)₂ having 5 wt % Pd (providing palladium loading 20g/ ft3), urea 0.5g; ammonium hydroxide solution (25% NH₄OH) 0.3g, benzoic acid 83 mg, ethanol 0.15g and distilled water 3.8 ml. Impregnated core was dried overnight in a closed container at 88°C and finally calcinated at 600°C for 2 h.

### Examples 4 -Invention

### Preparation of Pd/Al-Ti-Zr mixed oxide/alumina on monolith (core sample 1"x1.5")

All catalyst compounds were prepared on an alumina-coated cordierite core substrates having a cell density of 400 cpsi (= 'cells per square inch') with a 38% by weight alumina loading, having 1 inch in diameter and 1.5 inches length. The core samples were drilled from alumina-coated cordierite monolith.

### Example 4a

The dry core of alumina washcoated cordierite was impregnated with 3,85 g of solution of alkoxides of aluminum, titanium and zirconium prepared according to Example 1. The channels of core were blown with compressed air to remove the excess of liquid. Then, the core was treated with a flow of hot steam mixed with ammonia vapors, from both sides of core, whereas the ammonia-containing steam was obtained by bubbling compressed air through a container with boiling ammonia solution (25% wt. ammonia). This core was then dried at 100°C and calcinated at 600 °C for 2 h. Finally the core was impregnated with palladium containing solution as in Example 3 (20g Pd/ft³), dried and calcinated at 600 °C for 2 h.

### Example 4b

10g of zirconium (IV) n-butoxide Zr (OBu)₄ (80% solution in n-butanol) were mixed with 7.1 g of titanium (IV) n-butoxide (Alfa Aesar), 2g of n-butanol (Merck) and 0.4 g of aluminum triisopropoxide (Alfa Aesar) in a closed polypropylene container and stirred until complete dissolution of aluminum triisopropoxide. This mixture was added drop wise slowly to the solution of 15 ml of 20% nitric acid at room temperature and stirred until complete dissolution of initial deposit. The core was impregnated with 4.2 g of resulting liquid colloidal solution. The core was dried at 100 °C and calcinated at 600 °C for 2 h. Finally, the core was impregnated with palladium containing solution as in Example 3 (20g Pd/ft³), dried and calcinated at 600 °C for 2 h.

### References samples:

Commercially available DOCs (Diesel Oxidation Catalysts, platinum-only and platinum-palladium (loading of precious metals is in g/ft³) were tested:
Reference DOC sample A: 120 Pt 120 Pd (DOC Pt-120, Pd- 120)
Reference DOC sample B: 150 platinum (Pt) (DOC-Pt 150

All reference samples were calcinated under the same conditions at 600 °C for 2h in the same way as the samples which are presenting the current invention. The Pd catalysts prepared on other supports, such as alumina and zeolite by the same methods, were also tested for comparison purposes as reference catalysts.

The results are presented in the following figures with reference to the Figures 1 to 9. The figures show:
- Figure 1:: XRD analysis of Al-Ti-Zr mixed oxide after calcination at 400C/1 h;
- Figure 2:: XRD analysis of Al-Ti-Zr mixed oxide after calcination at 660C/2h;
- Figure 3:: Comparison of activity of Pd/Al-Ti-Zr catalyst (Example 2a, Invention) vs. Pd/γAl₂O₃ and Pd/other supports in CO oxidation; All samples were prepared by ion-exchange with palladium tetraammonium nitrate; Reaction mixture: CO - 1250 ppm, NO - 200 ppm, C₃H₆ - 250 ppm, CO₂ - 5.0 %, H₂O - 5.0%, O₂- 10%; N₂ - balance, SV = 50 000 h⁻¹;
- Figure 4:: Activity of Pd/Al-Ti-Zr catalyst (Example 2a, Invention) vs. Pd/γAl₂O₃ in CO oxidation at low temperatures; Reaction mixture CO - 0.5%, O₂ - 20.0 %, H₂O- 1.7%, CO₂ - 1.9%; N₂ - balance, SV = 50000 h⁻¹;
- Figure 5:: Activity of Pd/Al-Ti-Zr catalyst (Example 2a, Invention) at 30°C under different space velocities; Reaction mixture CO - 0.5%, O₂ - 20.0 %, H₂O - 1.7%, CO₂ - 1.9%; N₂ - balance, SV = 500-50000 h-¹;
- Figure 6:: The effect of Pd loading on CO oxidation activity for Pd/Al-Ti-Zr mixed oxide, Example 2b, Invention; Reaction mixture CO 1250 ppm, NO - 200 ppm, C₃H₆ - 250 ppm, CO₂ - 5.0 %, H₂O - 5.0%, O₂ 10%; N₂ - balance, SV = 50 000 h-¹;
- Figure 7:: The performance of catalysts in CO oxidation: catalysts of invention vs. commercial DOCs; core samples 1" x1.5"; Reaction mixture CO-1250 ppm, NO - 200 ppm, C₃H₆ - 250 ppm, CO₂ - 5.0 %, H₂O-5.0%, 0₂ - 10%; N₂ - balance, SV 10 000 h-¹;
- Figure 8:: The activity of catalysts of invention and commercial DOCs in C₃H₆ oxidation; core samples 1" x1.5"; Reaction mixture CO - 1250 ppm, NO - 200 ppm, C₃H₆ - 250 ppm, CO₂ - 5.0 %, H₂O - 5.0%, O₂ - 10%; N₂ - balance, SV = 10 000 h⁻¹;
- Figure 9:: The effect of palladium loading by consequent impregnations on activity in CO and C₃H₆ oxidation, core samples 1" x1.5"; Reaction mixture CO - 1250 ppm, NO - 200 ppm, C₃H₆ - 250 ppm, CO₂ - 5.0 %, H₂O - 5.0%, O₂ - 10%; N₂ - balance, SV = 10 000 h⁻¹.

### Results:

It has been found by the inventors that hydrolysis of a mixture of two or even more different metal alkoxides leads to non-homogenous precipitation of oxides, the most probably due to different hydrolysis rates. To avoid this problem and to obtain a homogenous ternary oxide, the preparation method was developed to instantly precipitate the metal oxides. So, the mixture of alkoxides is for example poured instantly in a large excess of boiling water containing added ammonia, providing immediate hydrolysis and precipitation. Further, the small amounts of aluminum alkoxide were added to the solution of titanium and zirconium alkoxides to increase the stability and surface area of the ternary mixed oxide thus obtained and to create the new acid sites by addition of aluminum triisopropoxide to the mixture of n-butoxides of zirconium and titanium.

Typically, molar ratios Ti: Zr of 1: 1 and 2: 1 were used to achieve good acidic properties of the carrier material. Aluminum was added in smaller quantities with constant Al /Ti +Zr molar ratio of about 1:20 for all preparation sets presented as the examples of this invention.

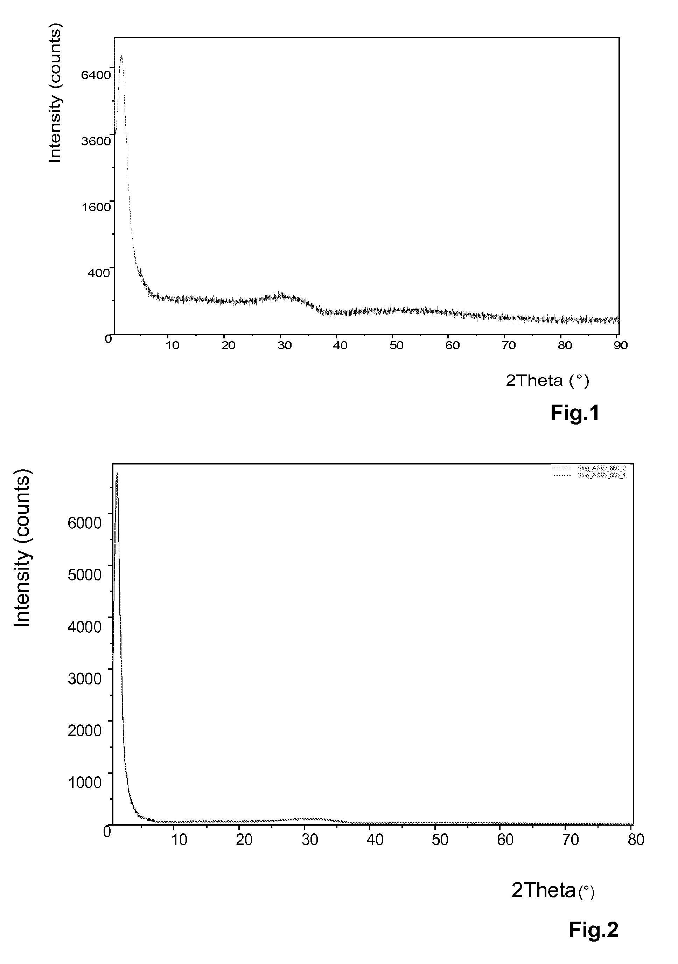

The method of instant hydrolysis is allowing obtaining highly homogeneous Al-Ti-Zr ternary mixed oxide with extremely high surface area. As an example, BET surface area of the sample, prepared according to Example 1, with Ti : Zr molar ratio 1 : 1 and Al /Ti +Zr molar ratio 1 : 20, was as high as 301 m² /g after calcinations at 400°C, 240 m² /g after calcinations at 525 °C, 229 m² /g after 600°C calcinations and decreased to 140 m² /g after severe calcinations at 660°C for 2 h. XRD studies at low angles revealed that the average particle size of Al-Ti-Zr is only 44 A (4.4 nm) after calcinations at 400°C, and this ternary mixed oxide was definitely X-ray amorphous, as shown in Figure 1. The average particle size increased to 53 A after calcinations after 525 °C, to 59 A after calcinations at 600°C and further increased to 68A after calcinations at 660°C for 2h. Surprisingly, this ternary Al-Ti-Zr oxide was still X-ray amorphous after treatment at 660°C, as shown in Figure 2, in contrast to individual oxides of titanium and zirconium. No formation of individual oxides of aluminum, titanium, and zirconium was detected after severe calcinations. From these BET and XRD studies we can conclude, that this new preparation method of instantaneous hydrolysis is allowing producing high-surface area material consisting of nano-size particles with high thermal stability and high homogeneity.

The activity of Pt; Pd and Pt-Pd noble metal catalysts deposited on mixed Al-Ti-Zr oxide by impregnation using palladium and/ or platinum tetraammonium nitrates was examined in CO oxidation on synthetic gas setup, using the reaction conditions simulating cold-start conditions of diesel engine with reaction mixture of CO - 1250 ppm, C₃H₆ - 250 ppm, NO - 200 ppm, O₂ - 10.0 %, CO₂ - 5.0 %, H₂O - 5.0%, N₂ - balance and SV = 50000 h⁻¹ for testing the powder samples. The Diesel oxidation catalyst (DOC) should provide the oxidation of unburned CO (carbon monoxide) and HC (hydrocarbons) in the engine at as lower temperature as possible. The typical exhaust temperatures of Diesel passenger cars are very low; the average temperature of exhaust is only 150 °C for ECE low-temperature part of NEDC European legislative driving cycle, simulating cold-start and urban driving. So the catalyst should cope with those emissions and provide complete oxidation of mentioned pollutants below 150 °C. Modern DOC having high Pt loading, can hardly cope with this problem.

Pt catalyst on mixed Al-Ti-Zr oxide has shown a good activity, providing complete CO oxidation near 155 °C, but Pd/mixed Al-Ti-Zr oxide surprisingly revealed better activity with complete CO oxidation near 130 °C, mixed Pt/Pd catalyst had some intermediate activity. Palladium catalyst deposited on mixed Ti-Zr oxide without Al additive has shown similar but lower activity and it had a problem to reach complete CO oxidation.

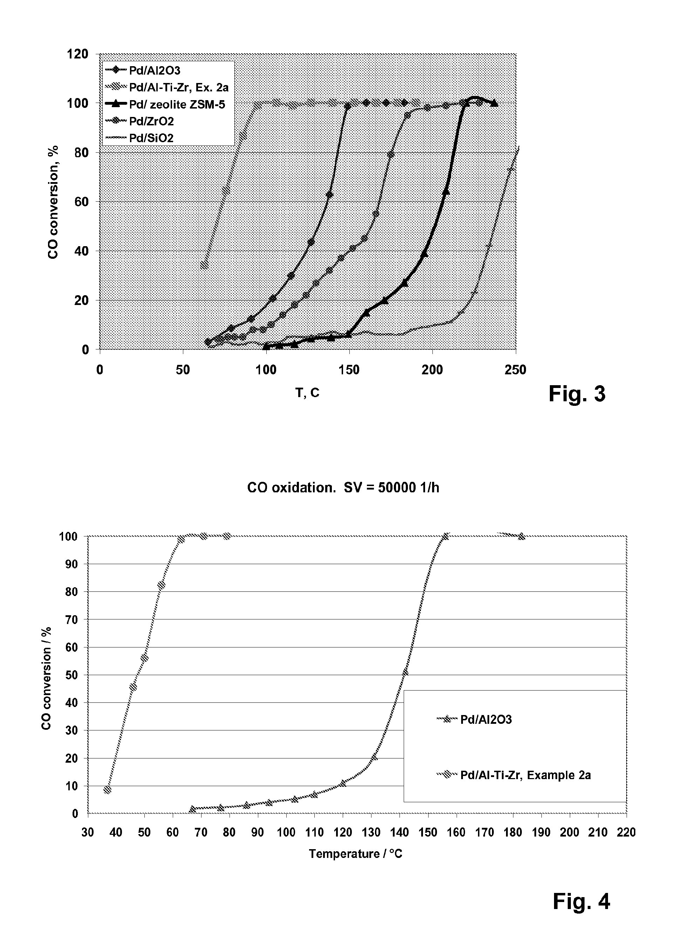

It has also been found that the activity of Pd/Al-Ti-Zr catalyst in CO oxidation at low temperatures can further be improved if deposition of palladium is carried out by ion-exchange of palladium, presenting as Pd (NH₃)₄ (NO₃)₂ in solution, leading to very high activity with complete CO oxidation at unusually low temperatures with complete CO oxidation below 100 °C. The results are presented on Figure 3. For comparison purposes, palladium was deposited on other common supports; such as Pd/Al₂O₃; Pd/SiO₂; Pd/ZrO₂ and Pd/zeolite ZSM-5, all prepared by the same method, and the results are shown on the same Figure 3. All reference catalysts, which have quite different basic-acidic properties, do not show any low- temperature activity in CO oxidation with palladium, so this low-temperature activity is extraordinary. Significant activity was found already at 60-70 °C, while there was no any activity for palladium on alumina or other common supports at temperatures below 100 °C.

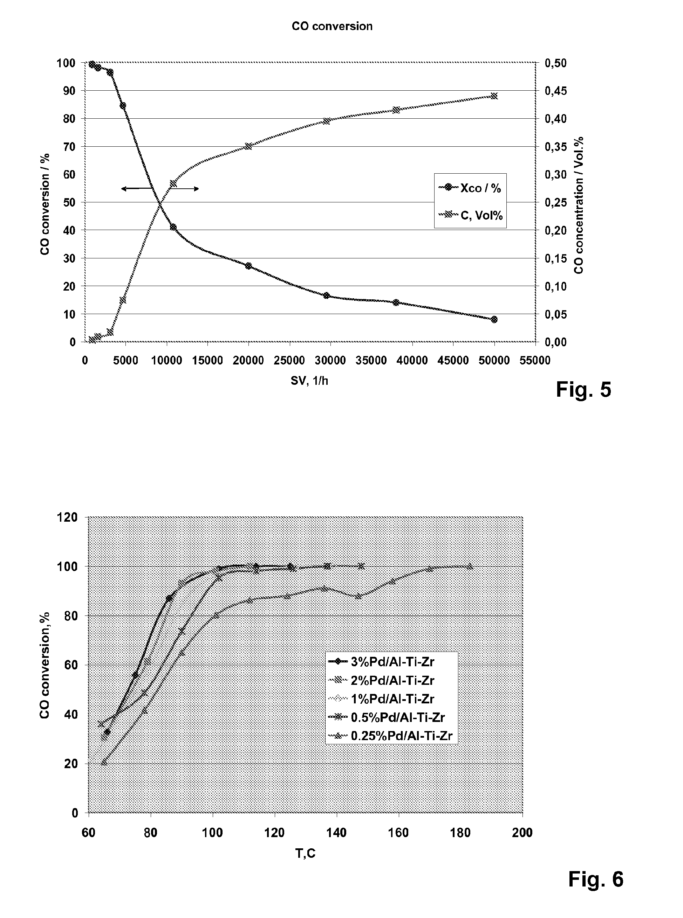

It is difficult to study low-temperature activity at temperatures below 60 °C under Diesel cold-start conditions due to the condensation of water at low temperatures. Therefore, the activity at near room temperature was studied using decreased amounts of water and CO₂ without nitrogen oxides and hydrocarbons but with relatively high CO level under conditions simulating possible CO elimination in closed parking areas and for respiratory protection systems. The data are presented in Figures 4 and 5. The Pd/Al-Ti-Zr shows superior activity at low temperatures, providing complete CO oxidation at near 55 °C at high space velocities and complete CO oxidation at near 30°C at low space velocities. Therefore, the catalyst according to this invention can be used for CO elimination for many non-Diesel applications, including industrial applications.

The method of preparation Pd/ Al-Ti-Zr mixed oxide using ion-exchange is convenient and reproducible, however it creates a lot of waste water and it is difficult to control and evaluate the palladium loading. The other problem with this method is the quite low activity in HC (propylene) oxidation with its complete oxidation at only 200°C.

To avoid these problems and to obtain results similar to ion-exchange regarding CO oxidation but with improved hydrocarbon oxidation activity, slow palladium precipitation with some excess of water is carried out in the presence of benzoic acid, ammonia and urea. This method is somewhat similar to ion-exchange, but without washing of the sample, as a result, all palladium is remaining on the support. Ammonia is competing with palladium ions for ion-exchangeable acidic centers. In addition, palladium is in complex with ammonia and can be deposited only by decomposition of this complex, and as a result the rate of palladium precipitation is suppressed and very slow. Urea can compensate the loss of ammonia due to its evaporation by release of ammonia by urea decomposition. As a result, ammonia is remaining in impregnating liquid until the complete drying. Benzoic acid is participating in creation of double ion layer on the surface of support and this bulky compound prevents the formation of big palladium clusters. To decrease the rate of drying, the process is carried out in closed container at 88 °C; this temperature is enough for slow urea decomposition. In general, this new method is allowing getting quite reproducible results and in addition the opportunity to use palladium nitrate, which is less expensive than palladium tetraammonium nitrate and can be prepared directly by dissolution of metallic palladium in nitric acid.

Due to the special new support in form of the ternary mixed oxide, very low palladium loadings are sufficient to obtain high catalytic activity. The activity of samples with decreasing palladium loadings from 2 wt.-% to 0.25 wt.-% under diesel cold-start conditions are shown in Figure 6. The sample having 0.5 wt.-% Pd still has shown a good low-temperature CO oxidation activity. This means a huge potential for cost savings, because typical platinum loading is 90-150 g/ft³ for commercial DOCs, which is equivalent to 2-3.3 wt.% Pt /alumina loading, and currently, platinum is significantly more expensive than palladium.

In the next step, Pd/Al-Ti-Zr was prepared on monolith, more particular on a core sample, which has been cut from a monolith brick. The deposition of powder Al-Ti-Zr mixed oxide prepared by instant hydrolysis as described in Example 1, and preliminary calcined, was carried out from 40% suspension of this Al-Ti-Zr mixed oxide powder in water. Small amounts of added zirconyl nitrate in diluted nitric acid were used as a binder. Vacuum pulses were applied to provide a homogeneous deposition of mixed oxide across the core sample. Deposition was carried out until the level of commercial aluminum loading on cordierite was reached, typically 3g/ per core of this size; the blowing of the channels with compressed air was necessary to avoid the blocking of the channels with this suspension.

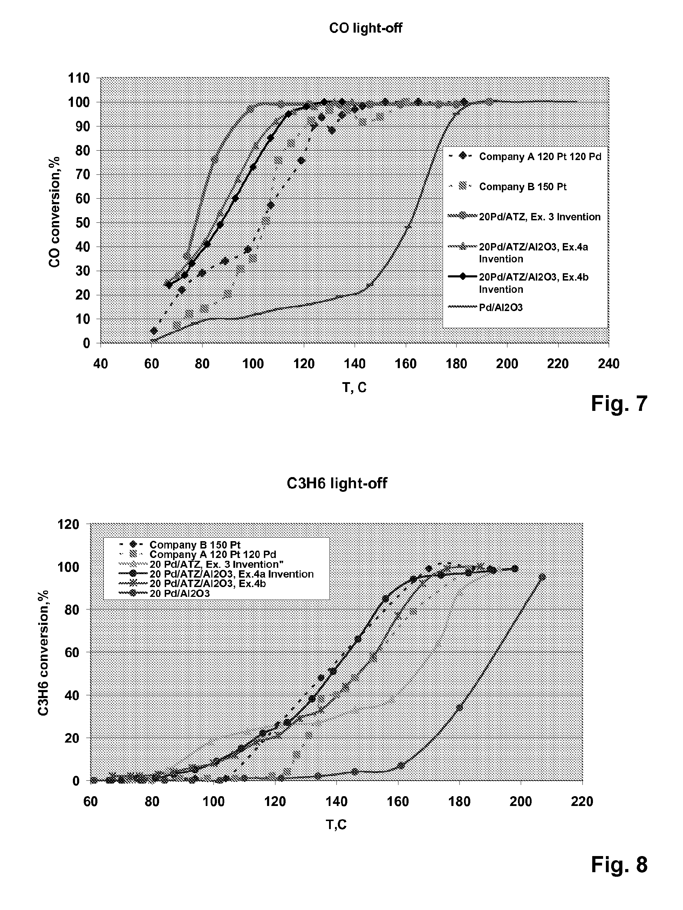

After the deposition of ternary mixed oxide, palladium was further deposited, using the same method of slow deposition as described above with ammonia, urea and benzoic acid in a closed container at 88°C. The sample was prepared with low palladium loading of 20 g Pd/ft³. Its activity and the comparison with two commercial DOCs, having extremely high Pt-150 g Pt/ft³ loading or high Pt and Pd loading (both metals 120 g /ft³) is displayed in Figure 7. Space velocity was lower in the case of core samples , namely 10 K h⁻¹, it is known that the results on monolith core samples are comparable with the results obtained on powder samples, when using near 4 times lower space velocities. For cold-start conditions for Diesel engine, the space velocities of 7-10 K h⁻¹ are typical.

The activity of this 20g/ ft³ Pd/Al-Ti-Zr mixed ternary oxide (Example 3, Invention) was superior relative to commercial samples in CO oxidation, providing complete CO oxidation below 100°C, meantime commercial samples were less active especially at low temperatures, providing less than 40% CO conversions at temperatures near 100 °C and they were able to reach complete CO oxidation only at 140-150 °C. In addition, some waving of CO conversion was observed for commercial DOCs containing Pt, which is typical for Pt catalysts behavior in CO oxidation. The catalyst material of invention was less active in propylene oxidation as can be seen in Figure 8, but the difference is not significant, and this Pd-only catalyst had better activity at low temperatures, but reach complete propylene oxidation at higher temperatures. For CO oxidation, even isolated Pt or Pd can be active, but for HC oxidation, the small clusters, which can provide several oxygen atoms for oxidation, have higher activity, and it is extremely difficult to compete in HC with commercial samples having high noble metal loadings.

In a further example, a support material in a form of monolith having commercial alumina washcoat was impregnated with a mixture of alkoxides of Al, Ti and Zr. As the next step, it was treated with a stream of hot water steam containing ammonia, thus forcing instantaneous hydrolysis of the alkoxides mixture and leading to a support material covered with ternary Al-Ti-Zr oxide. To use steam in this case is preferred as the possible blocking of the channels of the monolith material with the bulky ternary mixed oxide is avoided. Further, this core was loaded with Pd using the same procedure and the same Pd loading of 20 g/ft³ as described above. The preparation of such Pd/Al-Ti-Zr/Al₂O₃ on cordierite core is described in Example 4a. The results of testing are shown on Figures 7 and 8. As expected, such a Pd/Al-Ti-Zr /Alumina/Cordierite catalyst was less active than palladium on Al-Ti-Zr ternary mixed oxide/Cordierite, but it has shown a very good activity in CO oxidation, better than commercial samples highly loaded with noble metals.

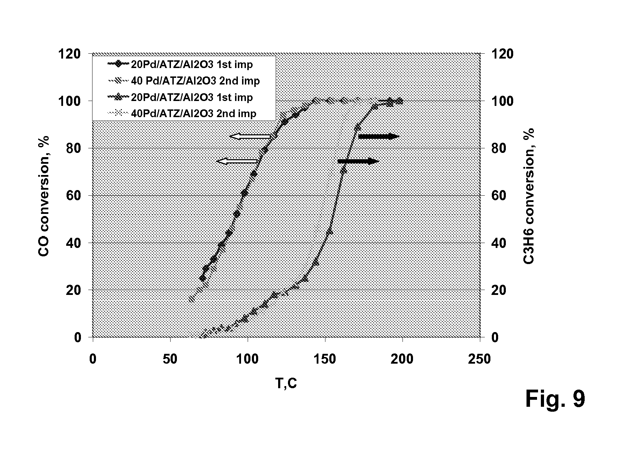

The activity in HC oxidation of such a catalyst is also better or at least comparable with commercial samples and better than the activity of palladium deposited on pure Al-Ti-Zr oxide with respect to C₃H₆ oxidation. The second impregnation with Pd (Pd loading increased to 40 g/ft³) further improved the activity in HC oxidation with small effect on CO oxidation activity, as shown on Figure 9. The activity of Pd/Alumina/Cordierite, prepared by the same way, was significantly lower, as can be seen on Figures 7 and 8.

Another method to introduce-deposit Al-Ti-Zr oxide on alumina coated cordierite was to hydrolyze the mixture of alkoxides in diluted nitric acid with the following dissolution to get a colloidal solution of Al-Ti-Zr mixed oxide. The cores were further impregnated with this solution, then dried and calcinated. This method is described in Example 4b. This method leads to similar result and activity in oxidation, as it is shown in Figures 7 and 8.

In general, it is possible to coat alumina and cordierite washcoated with alumina with this new ternary Al-Ti-Zr oxide and to improve its activity, using only palladium, to be better than commercial DOCs activity both in CO and C₃H₆ oxidation with significantly lower loadings of palladium as a single noble metal component. The aging of Pd/ Al-Ti-Zr catalyst at 650°C led to even slightly improved activity, so this catalyst can withstand the maximal temperatures typical for Diesel passenger cars.

Based on the results obtained, it can be concluded that palladium-only catalyst on new ternary Al-Ti-Zr ternary mixed oxide revealed an unusual CO oxidation activity at low and even at near-room temperatures, exceeding significantly the activity of current commercial DOCs at these temperatures. This catalyst material has a huge potential to reduce the cost of automotive aftertreatment systems, including Diesel and Petrol engine applications and can be used for low-temperature CO elimination for many applications in industry, stationary Diesel engines, respiratory protection and for different environmental applications. This new Pd/Al-Ti-Zr catalyst can be successfully deposited on monolith substrates, including alumina-washcoated cordierite substrate and can be integrated to current Diesel aftertreatment catalytic devices.

## Claims

1. Oxidation catalyst for reduction of CO and hydrocarbons, in particular in exhaust gas emitted from a combustion engine, the catalyst is a combination of at least palladium and a mixed oxide
**characterized in that,**
the mixed oxide is a ternary mixed oxide of titanium, zirconium and aluminum.

2. Catalyst according to claim 1,
**characterized in that,**
the molar ratio Ti : Zr ranges from 3:1 to 1:3, preferably 2:1 to 1:2, more preferred 1,25:1 to 1:1,25, most preferred about 1:1 and Al : Ti + Zr molar ratio ranges from 1:5 to 1: 30, preferably 1:10 to 1:25, more preferred 1:15 to 1:23, most preferred about 1:20.

3. Catalyst according to claim 1 or 2,
**characterized in that,**
the surface area of the ternary mixed oxide is exceeding 140 m²/g; preferably 220-300 m²/g; and/or the average particle size is 44-68 A.

4. Catalyst according to one of the preceding claims, **characterized in that,**
the ternary mixed oxide forms the support of the catalyst and is optionally deposited on a honeycomb substrate, as an example cordierite.

5. Catalyst according to one of the preceding claims, **characterized in that,**
the catalyst does not contain other noble metals, especially other platinum group metals, besides palladium.

6. Method for preparation of a ternary mixed oxide for catalyst according to one of the Claims 1 to 5, comprising at least the steps of
a) Bringing a mixture of aluminum, titanium and zirconium alkoxides into preferably instant contact with hot (at least 90°C) or boiling water containing at least 2.5% % ammonia under stirring to form a ternary mixed oxide,
b) Separation of the ternary mixed oxide preferably by filtration with the following drying and calcinations.

7. Method according to claim 6,
**characterized in that,**
the aluminum, titanium and zirconium alkoxides are chosen from C₂ to C₆-alkoxides, preferably isopropoxides and/or butoxides.

8. Method for preparation of catalyst Pd/mixed Al-Ti-Zr oxide for the reduction of CO, hydrocarbons and/or NOₓ in a gas, comprising at least the steps of
a) lon-exchange of ternary mixed oxide using the water solution of palladium ammonium nitrate at 80-100°C
b) Washing of mixed oxide with distilled water with the following drying and calcinations

9. Method for preparation of catalyst Pd/mixed Al-Ti-Zr oxide for the reduction of CO and hydrocarbons in the exhaust gas, comprising at least the steps of
a) Impregnation of the calcinated ternary mixed oxide with a solution of a palladium salt, preferably with a water solution of palladium ammonium nitrate and/or palladium nitrate especially in the presence of ammonia, benzoic acid and urea, preferably at temperatures from 60 to 95 °C, to obtain a palladium impregnated ternary mixed oxide;
b) drying of impregnated solid at 80 to 90°C, preferably at 88°C, in closed container with the following calcinations

10. Method to prepare mixed Al-Ti-Zr oxide supported on alumina or alumina-washcoated cordierite substrate
**characterized in that,**
an alumina or an alumina-washcoated cordierite substrate first are impregnated with the mixture of aluminum, titanium and zirconium alkoxides in n-butanol and then is brought into contact with water steam mixed with ammonia vapors to obtain an Al-Ti-Zr ternary mixed oxide impregnated on support material being made from alumina or alumina washcoated cordierite and being preferably in form of a honeycomb structure; with the following drying and calcinations of a support.

11. Method to prepare mixed Al-Ti-Zr oxide supported on alumina or alumina-washcoated cordierite substrate
**characterized in that**
the mixture of aluminum, titanium and zirconium alkoxides fist is dissolved in diluted nitric acid at room temperature under stirring and then alumina or alumina-washcoated cordierite substrate is further impregnated with the solution obtained with the following drying and calcinations

12. Catalyst for automotive or industrial applications, for respiratory protection and exhaust gas removal in closed parking areas, preferably as DOC (Diesel oxidation catalyst), comprising a palladium impregnated ternary mixed oxide of titanium, zirconium and aluminum obtainable by a method according to one of the claims 1 to 11.

13. Aftertreatment device for automotive or industrial applications, for respiratory protection and exhaust gas reduction in closed parking areas, preferably as DOC (Diesel oxidation catalyst) comprising a catalyst according to one of the claims 1 to 12

14. Catalytic system for exhaust gas aftertreatment, comprising at least one catalyst according to claim 13 and at least one other catalyst, preferably designed for DOC, LNT (lean NOx trap), SCR (selective catalytic reduction) catalyst or DPF (Diesel particulate filter).

15. Use of a catalyst according to claims 1 to 5 or 13 for the reduction of CO and hydrocarbons, in particular in exhaust gases of a combustion engine, in automotive or industrial applications, for respiratory protection and CO reduction in closed parking areas, but most preferably as DOC (Diesel oxidation catalyst).
